# EUROPEAN PATENT APPLICATION

(11) **EP 1 283 651 A1**
(43) Date of publication of application: **12.02.2003**
(21) Application number: 01402125.7
(22) Date of filing: 06.08.2001
(51) Int. Cl.: H04Q 7/38

(54) **A method and apparatus for handover in a CDMA cellular communication system**

(71) Applicant: MOTOROLA, INC., Schaumburg, IL 60196 (US)
(72) Inventor: Buljore, Soodesh, 91440 Bures sur Yvette (FR)
(74) Representative: Gibson, Sarah Jane

(57) **Abstract**

This invention relates to a method and apparatus for handover in a Code Division Multiple Access cellular communication system (100). A communication terminal (200) comprises means for determining a list of potential target base station and (213) for selecting a soft handover subset of target base stations from said plurality of target base stations in accordance with at least one selection criterion. The communication terminal (200) furthermore comprises means (211) determining a selection criterion and means (215) for setting up soft handover communication links with the base stations in the soft handover subset. The means (211) for determining the selection criterion is operable to dynamically update the selection criterion in response to an operating characteristic such as the speed or data rate of the communication terminal (200). The invention is applicable to 3^{rd} generation cellular communication systems such as UMTS.

## Description

### Field of the Invention

This invention relates to a method and apparatus for handover in a Code Division Multiple Access cellular communication system.

### Background of the Invention

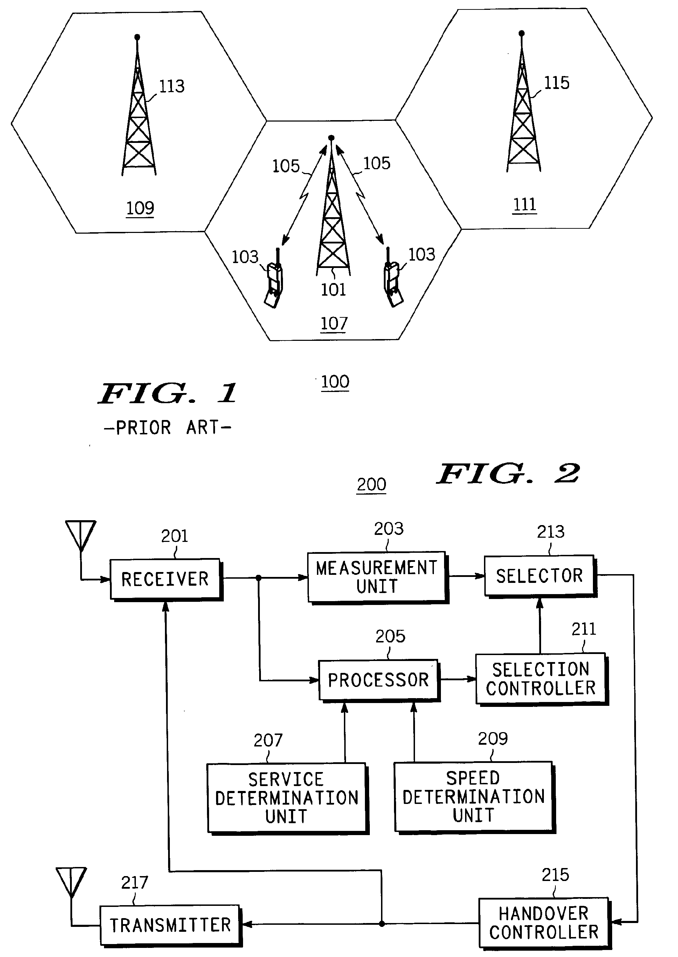

In a cellular communication system, each of the subscriber units (typically mobile stations) communicates with typically a fixed base station. Communication from the subscriber unit to the base station is known as uplink and communication from the base station to the subscriber unit is known as downlink. The total coverage area of the system is divided into a number of separate cells, each predominantly covered by a single base station. The cells are typically geographically distinct with an overlapping coverage area with neighbouring cells. FIG. 1 illustrates a cellular communication system 100. In the system, a base station 101 communicates with a number of subscriber units 103 over radio channels 105. In the cellular system, the base station 101 covers users within a certain geographical area 107, whereas other geographical areas 109, 111 are covered by other base stations 113, 115. Some overlap areas can be covered by more than one cell.

As a subscriber unit moves from the coverage area of one cell to the coverage area of another cell, the communication link will change from being between the subscriber unit and the base station of the first cell, to being between the subscriber unit and the base station of the second cell. This is known as a handover. Specifically, some cells may lie completely within the coverage of other larger cells.

All base stations are interconnected by a fixed network. This fixed network comprises communication lines, switches, interfaces to other communication networks and various controllers required for operating the network. A call from a subscriber unit is routed through the fixed network to the destination specific for this call. If the call is between two subscriber units of the same communication system the call will be routed through the fixed network to the base station of the cell in which the other subscriber unit currently is. A connection is thus established between the two serving cells through the fixed network. Alternatively, if the call is between a subscriber unit and a telephone connected to the Public Switched Telephone Network (PSTN) the call is routed from the serving base station to the interface between the cellular mobile communication system and the PSTN. It is then routed from the interface to the telephone by the PSTN.

A cellular mobile communication system is allocated a frequency spectrum for the radio communication between the subscriber units and the base stations. This spectrum must be shared between all subscriber units simultaneously using the system.

One method of sharing this spectrum is by a technique known as Code Division Multiple Access (CDMA). In a Direct Sequence CDMA (DS-CDMA) communication system, the signals are prior to being transmitted multiplied by a high rate code whereby the signal is spread over a larger frequency spectrum. A narrowband signal is thus spread and transmitted as a wideband signal. At the receiver, the original narrowband signal is regenerated by multiplication of the received signal with the same code. A signal spread by use of a different code will not be de-spread by the receiver but will remain a wide band signal and removed by filtering after the de-spreading operation. In the receiver, the majority of interference caused by interfering signals received in the same frequency spectrum as the wanted signal can thus be removed by filtering. Consequently, a plurality of subscriber units can be accommodated in the same wideband spectrum by allocating different codes for different subscriber units. Codes are chosen to minimise the interference caused between subscriber units typically by choosing orthogonal codes when possible. A further description of CDMA communication systems can be found in 'Spread Spectrum CDMA Systems for Wireless Communications', Glisic & Vucetic, Artech house Publishers, 1997, ISBN 0-89006-858-5. Examples of CDMA cellular communication systems are IS 95 standardised in North America and the Universal Mobile Telecommunication System (UMTS) currently under standardisation.

A subscriber unit, which is very close to a base station will initially be served by only this base station. As it moves towards another base station, it will enter the overlap area and a communication link with this base station will be set up. The subscriber unit is thus supported simultaneously by two base stations. As it continues to move towards the base station, the subscriber unit will exit the overlap area and the initial communication link with the first serving base station will be closed down so that the subscriber unit is only served by the second base station. This sequence is known as a soft handover and a subscriber unit being supported by more than one base station is known as being in a soft handover. A soft handover may involve more than two base stations.

Each base station transmits a pilot signal, which can be received by the subscriber units. A subscriber unit measures the pilot signal level of the transmitted pilot signal from a number of surrounding base stations. Each base station furthermore transmits information of neighbouring base stations, enabling the subscriber unit to search for the pilot signals of these cells. The subscriber unit reports the measured signal values back to the network and the preferred serving cell or cells is chosen based at least partly on these levels. In the simplest form, the serving cell is chosen as the cell(s) whose pilot signal(s) is (are) received at the highest level, as this will maximise the quality of the transmissions between the subscriber unit and the base station with the least cost in terms of power. In a real communication system, such as UMTS, more complex algorithms are used which may take into account factors such as the bit error rate of an ongoing communication.

The pilot signal level measurements are used in determining the best target cell when accessing the system, i.e. it is used by the subscriber unit to determine which base station to transmit a system access request to. In addition, the pilot signal level measurements are used to determine a list of potential handover candidates and which cells should be used for serving the cell, i.e. to which base stations a communication link should be set up. The set of base stations supporting the mobile station at any given point in time is known as the active set. In addition the set of base stations being measured but not active in a soft handover is known as the candidate set.

In conventional systems, such as UMTS, the neighbour list transmitted from the base stations is used to control the candidate set i.e. which base stations are being measured. The candidate set is thus determined as the base stations included in the neighbour list transmitted from the serving base station. The subscriber unit measures the signals from the base stations of the neighbour list and determines the active set as the base stations, which are received with a signal level falling within a static predetermined window. Typically the predetermined window is determined relative to the signal level of the serving base station, i.e. with a static predetermined offset relative to the signal level of the serving base station.

However, due to variations in propagation characteristics the active set may change very rapidly and some base stations will therefore pop in and out of the active set quite frequently. This will create a ping pong effect of base stations entering and leaving the active set, can cause interference peaks within the network leading to network instability and will use up resource for control messages required in the management of the hand over.

There is thus a need for an improved system for handover in a CDMA cellular communication system.

### Summary of the Invention

The invention seeks to provide an improvement for handovers in a CDMA cellular communication system.

Accordingly there is provided a communication terminal for a CDMA cellular communication as claimed in claim 1.

In a second aspect, the present invention provides a method of handover in a CDMA cellular communication system, as claimed in claim 10.

Further aspects are as claimed in the dependent claims.

### Brief Description of the Drawings

An embodiment of the present invention is described below, by way of example only, with reference to the Drawings, in which:
FIG. 1 is an illustration of a cellular communication system according to prior art;
FIG. 2 illustrates a communication terminal in accordance with an embodiment of the invention;
FIG 3 illustrates a method of handover in a CDMA cellular communication system in accordance with an embodiment of the invention.

### Detailed Description of a Preferred Embodiment

The following description focuses on an embodiment compliant with the current approach for the standardisation of UMTS but it will be apparent that the invention is not limited to this application.

FIG. 2 illustrates a communication terminal in accordance with an embodiment of the invention.

The communication terminal, which could be a mobile station, User Equipment (UE) or any other suitable communication device, comprises a receiver 201 which receives signals transmitted from the base station. The receiver is connected to a measurement unit 203, which measures the received signal level of the pilot signals of the base stations included in the candidate set. The candidate set is determined from the neighbour list transmitted from the serving base station in a conventional fashion. The candidate set comprises potential target base stations, i.e. base stations that may be included in a soft handover or become a serving cell.

The receiver 201 is also connected to a Processor 205 for determining an operating characteristic of the communication terminal. This operating characteristic can specifically relate to the current service or communication function or to the current operating characteristics for the communication terminal but any suitable operating characteristic may be envisaged without detracting from the invention.

In the embodiment shown in FIG. 2 the communication terminal 200 comprises a Service Determinator Unit 207 which determines which communication service is currently handled by the communication unit. The Service Determinator Unit 207 is connected to the processor 205. The input provided to the processor 205 for determining an operating characteristic by the Service Determinator Unit 207 can be one or more individual parameters related to the current communication service. Preferably this parameter is the data rate of the communication but may be other parameters or combination of parameters including quality of service, delay requirement or error sensitivity.

The embodiment of FIG. 2 furthermore comprises a Speed Determinator Unit 209 connected to the processor 205 for determining an operating characteristic of the communication terminal. The Speed Determinator Unit 209 determines the speed and/or the velocity of the communication terminal. This may be done in any known way without detracting from the present invention. Specific implementations include the user making a manual input of the speed travelled, the speed being determined from location determination embedded in the terminal (e.g. GPS location determination), or from input from external sensors such as a speedometer of a car. Alternatively, the speed determination can be indirect and be based on performance parameters within the network. The speed may thus be estimated from the frequency of the handovers or fades of the radio propagation channel. It is sufficient to determine an indication of the speed (for example whether the speed of the communication terminal is above or below a certain level) and no precise speed determination is required.

The contemplation of the invention includes other operation characteristics such as the location of the communication terminal, the available resource for communication, the computational resource available in the communication terminal etc.

The Processor 205 for determining an operating characteristic of the communication terminal is connected to a selection controller 211, which determines a selection criterion based on the operating characteristic. The selection controller 211 is connected to a selector 213 that selects the active set of base stations from the candidate set based on measurements performed and the determined selection criterion.

In the preferred embodiment the selection criterion is based on the measured receive level of the pilot signals of the base stations in the candidate set. The selection criterion is dynamically changed as the operating characteristics of the communication terminal changes.

In one embodiment, the selection criteria is given as the base stations for which the measured signal level is within a given range when filtered or averaged over a certain interval. In this embodiment, the filtering or averaging length is determined in response to the speed of the communication terminal so that the selection criterion changes dynamically in response to the speed of the communication terminal. Specifically the filtering length is increased for increasing speeds and reduced for lower speeds. These dynamic modifications in the filtering can be done continuously or may be in discrete steps for example by using different filters depending on the speed of the mobiles.

Alternatively or additionally the filtering length may be dependent on the communication service of the communication terminal and specifically on the data rate of the communication. In this embodiment the filtering length is increased for increasing data rates.

The filters used may be any appropriate filter implementation or structure but are preferably implemented as digital IIR (Infinite Impulse Response) or FIR (Finite Impulse Response) filters. The filtering length may be measured according to any desired definition or alternatively a suitably defined filter cut-off frequency may be used in dynamically modifying the filtering length and thereby the selection criterion. In the detailed embodiments described this will correspond to the filter cut-off frequency being reduced for increasing speeds and data rates.

By increasing the filtering length for increasing speeds and/or increasing data rates, links that have large time variations for a given service are less likely to become part of the active set. Therefore the ping pong effect is mitigated and improved network stability and reduction in resource used for changing the active set are achieved.

The output of the selector 213 is connected to a handover controller 215 which is connected to a transmitter 217 and the receiver 201. The handover controller 215 controls the receiver and transmitter such that they form communication links with all base stations included in the active set. This includes sending and receiving the necessary control messages required for maintaining, setting up and tearing down the individual soft hand over links.

For clarity the communication terminal 200 is shown with separate receive and transmit antennas but in a typical embodiment the transmitter and receiver will be connected to the same antenna through a duplexer.

It is within the contemplation of the invention that more than one selection criterion may be used for selecting the active set or that the selection criterion used may comprise a plurality of sub-criteria. Not all of these criteria need rely on the operating characteristic of the communication terminal and not all criteria are necessarily dynamically updated.

In one embodiment, the operation characteristic is based on the communication requirement of the receiver and specifically it is based on the data volume, which is intended to be transmitted. In this embodiment, if the data volume is very small the selection criteria is set so that a quick link is formed without consideration of the ping pong effect, i.e. the filtering length is set to minimum.

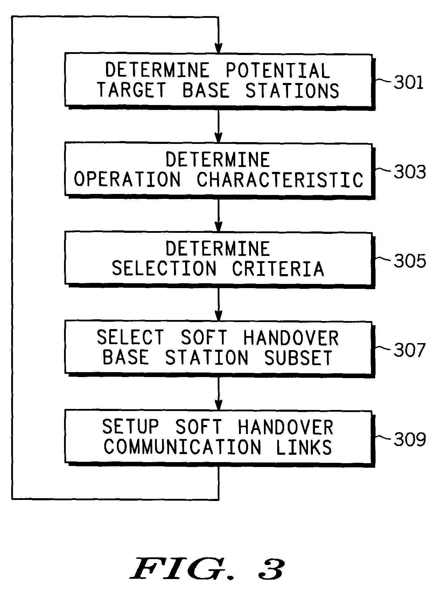

FIG 3 illustrates a method of handover in a CDMA cellular communication system in accordance with an embodiment of the invention.

In step 301 a list of potential target base stations is determined. In the preferred embodiment this is done by receiving a neighbour list form the serving base station and including the base stations identified therein in the list.

In step 303 an operation characteristic of the communication terminal is determined. In the preferred embodiment this is the speed and/or data rate of the communication terminal as previously described.

In step 305 a selection criterion is determined in response to the operating characteristic of the communication unit determined in step 303.

In step 307 a soft handover subset of target base stations is selected from the plurality of target base stations determined in step 301 in accordance with the selection criterion determined in step 305.

In step 309 soft handover communication links are set up with the base stations in the soft handover subset.

After step 309 the method is iterated such that the selection criterion is dynamically updated.

The method of FIG. 3 has been described as a series of sequentially re-iterated steps but it is not required that the steps are carried out sequentially or in the shown order. For example the determination of the operation characteristic and the determination of the selection criterion may be performed in parallel with the determination, selection and setting up of soft handover communication links performed in steps 301, 307 and 309. The iteration frequency of these parallel processes may be different for example so that the selection criterion is only modified when a new operating characteristic is determined.

The method shown in FIG 3 may be implemented in any suitable way without detracting from the current invention but in the preferred embodiment the method is implemented as a software program running on a suitable processor in the communication terminal. Alternatively, the method may for example be implemented in other components of the network, in a separate component of the network or be distributed over different components.

## Claims

1. A communication terminal (200) for a CDMA cellular communication system having a plurality of base stations, the communication unit comprising:
means for determining a list of potential target base station (213);
means for determining at least one selection criterion (211);
means for selecting a soft handover subset of target base stations from said plurality of target base stations in accordance with at least one selection criterion; and
means for setting up soft handover (215) communication links with the base stations in the soft handover subset; wherein
the means for determining at least one selection criterion (211) is operable to dynamically update the at least one selection criterion in response to an operating characteristic of the communication terminal (200).

2. A communication terminal (200) as claimed in claim 1 wherein the operating characteristic is a communication requirement of the communication terminal (200).

3. A communication terminal (200) as claimed in claim 1 wherein the operating characteristic is the speed of the communication terminal (200).

4. A communication terminal (200) as claimed in claim 1 wherein the operating characteristic is the service supported by the communication terminal (200).

5. A communication terminal (200) as claimed in claim 1 wherein the operating characteristic is a date rate of the communication.

6. A communication terminal (200) as claimed in claim 1 wherein the at least one selection criterion (211) is a filtered signal level received from each the plurality target base station and the dynamics of the filtering is dynamically updated in response to the operating characteristic of the unit.

7. A communication terminal (200) as claimed in claim 6 wherein the filtering duration is increased for increasing speeds of the communication terminal (200).

8. A communication terminal (200) as claimed in claim 6 wherein the filtering duration is increased for increasing data rates of the communication supported by the communication terminal (200).

9. A method of handover in a CDMA cellular communication system having a plurality of base stations, the method comprising the steps of:
determining a list of potential target base station (301);
selecting a soft handover subset (307) of target base stations from said plurality of target base stations in accordance with at least one selection criterion;
setting up soft handover communication links (309) with the base stations in the soft handover subset; wherein
the selection criteria for the soft handover subset is dynamically updated in response to an operating characteristic of the communication terminal (200).

10. A method of handover in a CDMA cellular communication system as claimed in claim 9 wherein the operating characteristic is the speed of the communication terminal (200).

11. A method of handover in a CDMA cellular communication system as claimed in claim 9 wherein the operating characteristic is the service supported by the communication terminal (200).

12. A method of handover in a CDMA cellular communication system as claimed in claim 9 wherein the operating characteristic is a date rate of the communication.

13. A method of handover in a CDMA cellular communication system as claimed in claim 9 wherein the at least one selection criterion is a filtered signal level received from each the plurality target base station and the dynamics of the filtering is dynamically updated in response to the operating characteristic of the unit.

14. A method of handover in a CDMA cellular communication system as claimed in claim 13 wherein the filtering duration is increased for increasing speeds of the communication terminal (200).

15. A method of handover in a CDMA cellular communication system as claimed in claim 13 wherein the filtering duration is increased for increasing data rates of the communication supported by the communication terminal (200).
